# EUROPEAN PATENT APPLICATION

(11) **EP 4 692 213 A1**
(43) Date of publication of application: **11.02.2026**
(21) Application number: 24779678.2
(22) Date of filing: 18.03.2024
(51) Int. Cl.: C08L 23/26, C08L 51/06

(54) **MODIFIED POLYOLEFIN RESIN COMPOSITION**

(30) Priority: 29.03.2023 JP 2023053529
(71) Applicant: Nippon Paper Industries Co., Ltd., Tokyo 114-0002 (JP)
(72) Inventor: HONOKI, Masatoshi, Tokyo 114-0002 (JP); ONO, Isamu, Tokyo 114-0002 (JP); WATANABE, Hikaru, Tokyo 114-0002 (JP); TAKENAKA, Takato, Tokyo 114-0002 (JP); SEKIGUCHI, Shunji, Tokyo 114-0002 (JP)
(74) Representative: Müller-Boré & Partner Patentanwälte PartG mbB
(86) International application number: PCT/JP2024/010595
(87) International publication number: WO 2024/203553

(57) **Abstract**

A resin composition contains: a modified product of a polyolefin resin (A) having a melting point of 100°C or lower, the polyolefin resin (A) being modified with at least one compound selected from the group consisting of α,β-unsaturated carboxylic acid and derivative thereof; and a modified product of a polyolefin resin (B) having an extrapolated melting initiation temperature (Tim) of 120°C or higher, the polyolefin resin (B) being modified with at least one compound selected from the group consisting of α,β-unsaturated carboxylic acid and derivative of the α,β-unsaturated carboxylic acid, where the modified product of the resin (B) is dispersed in the modified product of the resin (A) and the average particle diameter of the modified product of the resin (B) is in a range of from 0.1 to 100 µm.

## Description

### Field

The present invention relates to a resin composition containing a modified polyolefin obtained through modification with an α,β-unsaturated carboxylic acid and/or derivative thereof.

### Background

Polyolefin resins are used in a variety of applications such as sheets, films, and molded products due to their excellent properties such as: mechanical properties, for example, tensile, tear and impact strength; water and chemical resistance; light weight; low cost; and ease of molding. However, polyolefin resins, which are nonpolar and crystalline unlike polar base materials such as polyurethane-based resins, polyamide-based resins, acrylic resins, and polyester-based resins, are sometimes difficult to be painted and/or bonded.

In the automotive industry, modified polyolefin resins modified with an α,β-unsaturated carboxylic acid or derivative thereof having high adhesion properties are used as adhesion additives (in the automotive industry, paints which contains adhesion additives as main components and which are directly applied on base materials are specifically referred to as primer paints), etc. to bond difficult-to-bond paints to polyolefin resins (Patent Literature 1).

### Citation List

### Patent Literature

Patent Literature 1: Japanese Patent Application Laid-open No. 2001-279048

### Summary

### Technical Problem

It has been found that excellent heat-resistant adhesivity to difficult-to-adhere base materials such as polyolefins can be achieved with the use of modified polyolefin resins obtained by modifying polyolefin resins having relatively high melting points. However, such resins have a problem in that they are poor in solution stability and, consequently, in handling properties.

An object of the present invention is to provide a resin composition that is excellent in heat-resistant adhesivity to difficult-to-adhere base materials and in solution stability.

### Solution to Problem

The present invention provides the following.
<1> A resin composition comprising:
   a modified product of a polyolefin resin (A) having a melting point of 100°C or lower as measured using a differential scanning calorimeter at a temperature increase rate of 10°C/min in accordance with JIS K7121-1987, the polyolefin resin (A) being modified with at least one compound selected from the group consisting of an α,β-unsaturated carboxylic acid and derivative of the α,β-unsaturated carboxylic acid; and
   a modified product of a polyolefin resin (B) having an extrapolated melting initiation temperature (Tim) of 120°C or higher as measured using the differential scanning calorimeter at a temperature increase rate of 10°C/min in accordance with JIS K7121-1987, the polyolefin resin (B) being modified with at least one compound selected from the group consisting of an α,β-unsaturated carboxylic acid and derivative of the α,β-unsaturated carboxylic acid, wherein
   the modified product of the resin (B) is dispersed in the modified product of the resin (A), and
   an average particle diameter of the modified product of the resin (B) is in a range of from 0.1 to 100 µm.
<2> The resin composition according to the above <1>, wherein the at least one compound selected from the group consisting of the α,β-unsaturated carboxylic acid and derivative of the α,β-unsaturated carboxylic acid comprises maleic anhydride.
<3> The resin composition according to the above <1> or <2>, wherein the at least one compound selected from the group consisting of the α,β-unsaturated carboxylic acid and derivative of the α,β-unsaturated carboxylic acid comprises a (meth)acrylic acid ester.
<4> The resin composition according to any one of the above <1> to <3>, wherein the melting point of the resin (B) measured using the differential scanning calorimeter in accordance with JIS K7121-1987 at a temperature increase rate of 10°C/min is in a range of from 140 to 200°C.
<5> The resin composition according to any one of the above <1> to <4>, wherein, in terms of a mass ratio of the modified product of the resin (A) and the modified product of the resin (B), the modified product of the resin (A) : the modified product of the resin (B) = 50:50 to 95:5.
<6> The resin composition according to any one of the above <1> to <5>, wherein a difference (Tem - Tim) between an extrapolated melting end temperature (Tem) and the extrapolated melting initiation temperature (Tim) measured using the differential scanning calorimeter in accordance with JIS K7121-1987 at the temperature increase rate of 10°C/min is in a range of from 5 to 20°C.
<7> The resin composition according to any one of the above <1> to <6>, further comprising a hydrophobic solvent.
<8> A primer comprising the resin composition according to any one of the above <1> to <7>.
<9> An adhesive comprising the resin composition according to any one of the above <1> to <7>.
<10> A paint comprising the resin composition according to any one of the above <1> to <7>.
<11> An ink comprising the resin composition according to any one of the above <1> to <7>.
<12> A method for producing the resin composition according to any one of the above <1> to <7>, comprising:
   (1) a step of simultaneously modifying a mixture of the resin (A) and the resin (B) with at least one compound selected from the group consisting of α,β-unsaturated carboxylic acid and derivative of the α,β-unsaturated carboxylic acid to obtain the resin composition; or
   (2) a step of modifying the resin (A) with at least one compound selected from the group consisting of α,β-unsaturated carboxylic acid and derivative of the α,β-unsaturated carboxylic acid to obtain the modified product of the resin (A), a step of modifying the resin (B) with at least one compound selected from the group consisting of α,β-unsaturated carboxylic acid and derivative of the α,β-unsaturated carboxylic acid to obtain the modified product of the resin (B), and a step of mixing the obtained modified product of the resin (A) and the obtained modified product of the resin (B) to obtain the resin composition.

### Advantageous Effects of Invention

According to the present invention, it is possible to provide a resin composition that can exhibit excellent heat-resistant adhesivity to difficult-to-adhere base materials and solution stability.

### Description of Embodiments

In the following descriptions, unless otherwise noted, phrases such as "AA to BB" mean " AA or more and BB or less." In the above, "AA" and "BB" are each a numerical value and AA < BB. The unit for "AA" is the same as the unit assigned to "BB" unless otherwise noted.

In the following description, unless otherwise specified, the term "(meth)acrylic acid" encompasses an "acrylic acid," a "methacrylic acid," and combinations thereof, and the term "(meth)acrylate" encompasses an "acrylate," a "methacrylate," and combinations thereof.

The present invention provides a resin composition containing: a modified product of a polyolefin resin (A) having a melting point of 100°C or lower, the polyolefin resin (A) being modified with an α,β-unsaturated carboxylic acid and/or derivative thereof; and a modified product of a polyolefin resin (B) having an extrapolated melting initiation temperature (Tim) of 120°C or higher, the polyolefin resin (B) being modified with an α,β-unsaturated carboxylic acid and/or derivative thereof, where the modified product of the resin (B) is dispersed in the modified product of the resin (A) and an average particle diameter of the modified product of the resin (B) is in a range of from 0.1 to 100 µm. Such a resin composition can exhibit excellent heat-resistant adhesivity to difficult-to-adhere base materials and solution stability.

Hereafter, the resin (A) is sometimes simply referred to as a component (A) and the resin (B) is sometimes simply referred to as a component (B).

### 1. Polyolefin Resin

The resin composition of the present invention contains: the modified product of the polyolefin resin (A) having a melting point of 100°C or lower, the polyolefin resin (A) being modified with an α,β-unsaturated carboxylic acid and/or derivative thereof; and the modified product of the polyolefin resin (B) having an extrapolated melting initiation temperature (Tim) of 120°C or higher, the polyolefin resin (B) being modified with an α,β-unsaturated carboxylic acid and/or derivative thereof.

The polyolefin resins are olefin (preferably α-olefin) polymers. Examples of the α-olefin may include ethylene, propylene, 1-butene, 1-pentene, 1-hexene, 1-heptene, and 1-octene.

The polyolefin resin may be a polymer of a single olefin (preferably α-olefin) or a copolymer of two or more olefins (preferably α-olefins). When the polyolefin resin is a copolymer, the polyolefin resin may be a random copolymer or a block copolymer.

The mass ratio of the modified product of the component (A) to the modified product of the component (B) (the modified product of the component (A): the modified product of the component (B)) is preferably in a range of from 40:60 to 95:5, more preferably in a range of from 50:50 to 95:5, still more preferably in a range of from 60:40 to 95:5, even more preferably in a range of from 70:30 to 95:5 and especially preferably in a range of from 75:25 to 95:5.

### 1-1. Component (A): Polyolefin Resin Having Melting Point of 100°C or Lower

The polyolefin resin as the component (A) is preferably polypropylene (propylene homopolymer), ethylene-propylene copolymer, propylene-1-butene copolymer, ethylene-propylene-1-butene copolymer, or a mixture of these polymers from the viewpoint of achieving sufficient adhesion.

The term "polypropylene" herein refers to a polymer whose structural units are derived from propylene. The term "ethylene-propylene copolymer" refers to a copolymer including a structural unit derived from ethylene and a structural unit derived from propylene. The term "propylene-1-butene copolymer" refers to a copolymer including a structural unit derived from propylene and a structural unit derived from 1-butene. The term "ethylene-propylene-1-butene copolymer" refers to a copolymer including a structural unit derived from ethylene, a structural unit derived from propylene, and a structural unit derived from 1-butene. These (co)polymers may include small fraction of structural unit(s) derived from other olefin(s) as long as the intrinsic performance of the resin is not significantly impaired.

The polyolefin resin as the component (A) preferably contains 15 mol% or more, more preferably 50 mol% or more of the structural units derived from propylene in all of the structural units (100 mol%). Excellent adhesivity can be maintained when the structural units derived from propylene are included within the above range.

When the polyolefin resin as the component (A) is an ethylene-propylene copolymer or a propylene-1-butene copolymer, structural units derived from ethylene or 1-butene preferably account for 3 to 85 mol% (more preferably 3 to 50 mol%) of all of the structural units (100 mol%) and structural units derived from propylene preferably account for 15 to 97 mol% (more preferably 50 to 97 mol%) of all of the structural units.

The lower limit of the melting point (Tm) of the polyolefin resin as the component (A) is preferably 60°C or higher, more preferably 80°C or higher, still more preferably 90°C or higher, and especially preferably 95°C or higher. Sufficient coating film strength can be achieved with the melting point of the polyolefin resin as the component (A) being within the above range when the resin composition is used for inks, paints, and the like applications. Therefore, adhesivity to the base material can be sufficiently exhibited. In addition, when the resin composition is used as an ink, blocking caused during printing process can be restrained. The melting point (Tm) of the polyolefin resin as the component (A) can be measured in accordance with JIS K7121-1987 using a differential scanning calorimeter at a temperature increase rate of 10°C/min.

The weight average molecular weight (Mw) of the polyolefin resin as the component (A) is preferably 5,000 or more, more preferably 10,000 or more, still more preferably 30,000 or more, even more preferably 50,000 or more, and especially preferably 100,000 or more. The upper limit of Mw is preferably 200,000 or less, more preferably 180,000 or less, still more preferably 170,000 or less, even more preferably 160,000 or less, and especially preferably 150,000 or less. The weight average molecular weight (Mw) can be measured by gel permeation chromatography (GPC) using polystyrene as a standard substance.

### 1-2. Component (B): Polyolefin Resin Having Extrapolated Melting Initiation Temperature of 120°C or Higher

The polyolefin resin as the component (B) is preferably polypropylene (propylene homopolymer), ethylene-propylene copolymer, propylene-1-butene copolymer, ethylene-propylene-1-butene copolymer, or a mixture of these polymers.

The lower limit of the melting point (Tm) of the polyolefin resin as the component (B) is preferably 140°C or higher, more preferably 145°C or higher, still more preferably 150°C or higher, and especially preferably 155°C or higher. The upper limit of Tm is preferably 200°C or lower, more preferably 190°C or lower, still more preferably 180°C or lower, and especially preferably 170°C or lower. The melting point (Tm) of the polyolefin resin as the component (B) can be measured using a differential scanning calorimeter in accordance with JIS K7121-1987 at a temperature increase rate of 10°C/min.

The lower limit of the extrapolated melting initiation temperature (Tim) of the polyolefin resin as the component (B) is 120°C or higher, preferably 125°C or higher, more preferably 130°C or higher, still more preferably 135°C or higher, and especially preferably 140°C or higher. The upper limit of Tim is preferably 200°C or lower, more preferably 190°C or lower, still more preferably 180°C or lower, and especially preferably 170°C or lower. The extrapolated melting initiation temperature (Tim) of the polyolefin resin as the component (B) can be measured using a differential scanning calorimeter in accordance with JIS K7121-1987 at a temperature increase rate of 10°C/min.

The lower limit of the extrapolated melting end temperature (Tem) of the polyolefin resin as the component (B) is preferably 135°C or higher, more preferably 140°C or higher, still more preferably 145°C or higher, and especially preferably 150°C or higher. The upper limit of Tem is preferably 210°C or lower, more preferably 200°C or lower, still more preferably 190°C or lower, and especially preferably 180°C or lower. The extrapolated melting end temperature (Tem) of the polyolefin resin as the component (B) can be measured using a differential scanning calorimeter in accordance with JIS K7121-1987 at a temperature increase rate of 10°C/min.

The difference (Tem-Tim) between the extrapolated melting end temperature (Tem) and the extrapolated melting initiation temperature (Tim) of the polyolefin resin as the component (B) is preferably in a range of from 5 to 20°C, more preferably in a range of from 10 to 20°C, still more preferably in a range of from 10 to 19°C, and especially preferably in a range of from 12 to 18°C.

The weight average molecular weight (Mw) of the polyolefin resin as the component (B) is preferably 5,000 or more, more preferably 10,000 or more, still more preferably 30,000 or more, even more preferably 40,000 or more, and especially preferably 50,000 or more. The upper limit of Mw is preferably 500,000 or less, more preferably 400,000 or less, still more preferably 300,000 or less, even more preferably 200,000 or less, and especially preferably 180,000 or less.

### 2. Modification with α,β-Unsaturated Carboxylic Acid and/or Derivative Thereof

The resin composition of the present invention can be obtained, for example, by
(1) a method including a step of simultaneously modifying a mixture of the component (A) and the component (B) with an α,β-unsaturated carboxylic acid and/or derivative thereof to obtain the resin composition of the present invention (hereinafter sometimes referred to as "simultaneous modification") or
(2) a method including steps of: modifying the component (A) with a,β-unsaturated carboxylic acid and/or derivative thereof to obtain a modified product of the component (A); modifying the component (B) with an α,β-unsaturated carboxylic acid and/or derivative thereof to obtain a modified product of the component (B); and mixing the resulting modified products of the component (A) and the component (B) to obtain the resin composition of the present invention (hereinafter sometimes referred to as "individual modification").

The modification by the α,β-unsaturated carboxylic acid and/or derivative thereof through, for example, graft copolymerization of the α,β-unsaturated carboxylic acid or derivative thereof to a polyolefin chain of the polyolefin resins as raw material. The modification process by the α,β-unsaturated carboxylic acid and/or derivative thereof can be performed using a melting method.

The modification process by the α,β-unsaturated carboxylic acid and/or derivative thereof is preferably carried out, for example, by heating and melting the polyolefin resins and reacting the melted polyolefin resins with the α,β-unsaturated carboxylic acid and/or derivative thereof. The temperature for heating and melting, which may be above the melting point of the raw material polyolefin resin (the component (B) in the case of simultaneous modification), is preferably the melting point of the raw material polyolefin resin (the component (B) in the case of simultaneous modification) or higher and 300°C or lower, more preferably the melting point of the raw material polyolefin resin (the component (B) in the case of simultaneous modification) or higher and 250°C or lower, and especially preferably the melting point of the raw material polyolefin resin (the component (B) in the case of simultaneous modification) or higher and 200°C or lower.

The modification process with the α,β-unsaturated carboxylic acid and/or derivative thereof, which can be performed using equipment such as a banbury mixer, kneader, and extruder, is preferably performed using an extruder (i.e., by extrusion modification).

In the case of simultaneous modification, the extrusion modification method may include, for example: feeding a raw material mixture of the component (A) and the component (B) to a feeding section of an extruder (e.g., a co-directional multi-axial extruder or a twin-screw extruder), mixing, melting, kneading, reacting, and devolatilizing the raw material at, for instance, the above heating and melting temperature together with the α,β-unsaturated carboxylic acid and/or derivative thereof in the extruder, cooling, and further cooling (e.g., immersing in a water tank) the resin coming out of a tip die of the extruder to obtain the resin composition of the present invention. The progress in the modification reaction and of kneading can be adjusted by controlling the temperature in relevant parts of the barrel and screw speed of the extruder.

In the case of individual modification, the extrusion modification method may include, for example: feeding the raw material component (A) to a feeding section of an extruder, mixing, melting, kneading, reacting, and devolatilizing the raw material at, for instance, the above heating and melting temperature together with the α,β-unsaturated carboxylic acid and/or derivative thereof in the extruder, cooling, and further cooling the resin coming out of the tip die of the extruder to obtain the modified product of the component (A); feeding the raw material component (B) to a feeding section of an extruder, mixing, melting, kneading, reacting, and devolatilizing the raw material at, for instance, the above heating and melting temperature together with the α,β-unsaturated carboxylic acid and/or derivative thereof in the extruder, cooling, and further cooling the resin coming out of the tip die of the extruder to obtain the modified product of the component (B); and feeding the resulting modified product of the component (A) and resulting modified product of the component (B) to a feeding section of an extruder, melting and kneading the modified products at, for instance, a temperature similar to the above heating and melting temperature in the extruder, cooling, and further cooling the resin coming out of the tip die of the extruder to obtain the resin composition of the present invention. The progress in modification reaction and of kneading process can be controlled by adjusting the temperature in relevant parts of the barrel and screw speed of the extruder as in the simultaneous modification.

Examples of the derivative of the α,β-unsaturated carboxylic acid may include α,β-unsaturated carboxylic anhydrides, α,β-unsaturated carboxylic acid esters, α,β-unsaturated carboxylic acid amides, and α,β -unsaturated carboxylic acid imides. In the case of individual modification, the α,β-unsaturated carboxylic acid and derivative thereof for modifying the component (A) and the α,β-unsaturated carboxylic acid and derivative thereof for modifying the component (B) may be the same or different.

Examples of the α,β-unsaturated carboxylic acid and derivative thereof may include maleic acid, maleic anhydride, fumaric acid, citraconic acid, citraconic anhydride, mesaconic acid, itaconic acid, itaconic anhydride, aconitic acid, aconitic anhydride, himic anhydride, (meth)acrylic acid, and (meth)acrylic acid esters. The α,β-unsaturated carboxylic acid and derivative thereof preferably include at least one of maleic anhydride and (meth)acrylic acid esters.

In one embodiment, the α,β-unsaturated carboxylic acid and/or derivative thereof more preferably contains a (meth)acrylic acid ester. Preferable examples of the (meth)acrylic acid ester may include alkyl (meth)acrylate such as methyl (meth)acrylate, ethyl (meth)acrylate, n-propyl (meth)acrylate, isopropyl (meth)acrylate, n-butyl (meth)acrylate, sec-butyl (meth)acrylate, tert-butyl (meth)acrylate, 2-ethylhexyl (meth)acrylate, n-octyl (meth)acrylate, decyl (meth)acrylate, isodecyl (meth)acrylate, 2,4,6-trimethylheptyl (meth)acrylate, undecyl (meth)acrylate, lauryl (meth)acrylate, tridecyl (meth)acrylate, tetradecyl (meth)acrylate, and stearyl (meth)acrylate. In one embodiment, the carbon number of the alkyl group of the alkyl (meth)acrylate is preferably in a range of from 1 to 30, more preferably in a range of from 4 to 20, still more preferably in a range of from 8 to 16, and especially preferably in a range of from 10 to 14. In one embodiment, the alkyl (meth)acrylate is most preferably lauryl (meth)acrylate.

In one embodiment, the α,β-unsaturated carboxylic acid and/or derivative thereof more preferably contains maleic anhydride. When maleic anhydride is contained in the α,β-unsaturated carboxylic acid and/or derivative thereof, the cyclic structure derived from maleic anhydride in the modified polyolefin resin may be partially hydrolyzed to open the ring.

The content of maleic anhydride in the α,β-unsaturated carboxylic acid and/or derivative thereof is preferably 10 mass% or more, more preferably 30 mass% or more, still more preferably 40 mass% or more, and especially preferably 50 mass% or more with respect to the total content (100 mass%) of the α,β-unsaturated carboxylic acid and/or derivative thereof.

The amount of the α,β-unsaturated carboxylic acid and/or derivative thereof used for modification using the α,β-unsaturated carboxylic acid and/or derivative thereof is preferably 50 wt% or less, more preferably 30 wt% or less, still more preferably 20 wt% or less, and especially preferably 10 wt% or less with respect to 100 wt% of the raw material polyolefin resin. The lower limit of the α,β-unsaturated carboxylic acid and/or derivative thereof, which is not particularly limited, is preferably 0.01 wt% or more, more preferably 0.1 wt% or more, still more preferably 1 wt% or more, and especially preferably 3 wt% or more.

The modification process with the α,β-unsaturated carboxylic acid and/or derivative thereof is preferably performed in the presence of a radical reaction initiator. The radical reaction initiator can be, for example, a thermal polymerization reaction initiator that generates free radicals upon heating, examples of which may include organic peroxides and azonitriles. Examples of the organic peroxides may include di-tert-butyl peroxide, dicumyl peroxide, tert-butylcumyl peroxide, dibenzoyl peroxide, benzoyl m-tolyl peroxide, di(m-tolyl)benzoyl, dilauryl peroxide, 2,5-dimethyl-2,5-di(tert-butylperoxy)hexane, cumene hydroperoxide, tert-butyl hydroperoxide, 1,1-bis(tert-butylperoxy)-3,5,5-trimethylcyclohexane, 1,1-bis(tert-butylperoxy)-cyclohexane, cyclohexanone peroxide, tert-butyl peroxybenzoate, tert-butyl peroxyisobutyrate, tert-butylperoxy-3,5,5-trimethylhexanoate, tert-butylperoxy-2-ethylhexanoate, tert-butyl peroxyisopropyl carbonate, and cumylperoxyoctoate. Examples of the azonitriles may include 2,2-azobis(2-methylbutyronitrile), 2,2-azobisisobutyronitrile, 2,2-azobis(2,4-dimethylvaleronitrile), 2,2-azobis(4-methoxy-2,4-dimethylvaleronitrile).

The amount of the radical reaction initiator used for modification with the α,β-unsaturated carboxylic acid and/or derivative thereof is preferably in a range of from 0.01 wt% to 3 wt%, more preferably in a range of from 0.1 wt% to 2 wt% with respect to 100 wt% of the raw material polyolefin resin.

The mass ratio of the amount of the raw material component (A) to the amount of the raw material component (B) (component (A): component (B)) required to obtain the resin composition of the present invention is preferably in a range of from 40:60 to 95:5, more preferably in a range of from 50:50 to 95:5, still more preferably in a range of from 60:40 to 95:5, even more preferably in a range of from 70:30 to 95:5, and especially preferably in a range of from 75:25 to 95:5. In the case of simultaneous modification, the modification process is performed using a mixture of the component (A) and component (B) blended in the above mass ratio as the raw material to obtain the resin composition. For the individual modification, the component (A) and the component (B) are separately modified at the above mass ratios of the used raw materials and the resulting modified products are mixed to obtain a resin composition.

The total graft weight (modification degree) of the α,β-unsaturated carboxylic acid and/or derivative thereof in the resin composition of the present invention with respect to the total amount (100 wt%) of the modified products of the component (A) and the component (B) is, preferably 50 wt% or less, more preferably 30 wt% or less, still more preferably 20 wt% or less, and especially preferably 10 wt% or less. The lower limit of the total graft weight, which is not particularly limited, is preferably 0.01 wt% or more, more preferably 0.1 wt% or more, and still more preferably 1 wt% or more. The graft weight (wt%) can be determined by, for example, alkali titration, Fourier transform infrared spectroscopy, or ¹H-NMR or the like.

### 3. Resin Composition

The resin composition of the present invention is in a form of dispersion of the modified product of the component (B) in the modified product of the component (A). The modified product of the component (B) can be in particulate form. The modified product of the component (B) may be in a form of particles, in which unmodified polyolefin resin of the component (B) and modified polyolefin resin of the component (B) are unevenly mixed.

The resin composition of the present invention may contain hydrophobic solvent. The resin composition of the present invention encompasses a solid form, in which solid particles of the modified product of the component (B) are dispersed in solid particles of the modified product of the component (A), a liquid form, in which solid particles of the modified product of the component (B) are dispersed in a solution dissolved with the modified product of the component (A), and the like.

When the extrusion modification method is used to obtain the resin composition of the present invention, the resin composition obtained by cooling the resin coming out of the tip die of the extruder can be in a form of a solid, in which solid particles of the modified product of the component (B) are dispersed in a solid of the modified product of the component (A). The solid resin composition thus obtained can be mixed with hydrophobic solvent to form a liquid, in which solid particles of the modified product of the component (B) are dispersed in a solution dissolved with the modified product of the component (A).

Examples of the hydrophobic solvent may include: aromatic hydrocarbon-based solvents such as toluene and xylene; ester-based solvents such as methyl acetate, ethyl acetate, n-propyl acetate, isopropyl acetate, and butyl acetate; ketone-based solvents such as acetone, methyl ethyl ketone, and methyl butyl ketone; alicyclic hydrocarbon-based solvents such as cyclohexane, methylcyclohexane, and ethylcyclohexane; and aliphatic hydrocarbon-based solvents such as hexane, nonane, and decane.

The average particle diameter of the modified product of the component (B), which is in a range of from 0.1 to 500 µm and is not particularly limited, is preferably in a range of from 0.1 to 200 µm, more preferably in a range of from 0.1 to 100 µm, still more preferably in a range of from 0.3 to 50 µm, even more preferably in a range of from 0.4 to 20 µm, and especially preferably in a range of from 0.5 to 10 µm. The average particle diameter of the modified product of the component (B) may be volume-based median diameter Dv50 (the maximum particle diameter below which 50% of the sample volume falls). The average particle diameter of the modified product of the component (B) can be measured and calculated, for example, as in Test Example 1 below.

The resin composition of the present invention exhibits low water vapor transmission volume when molded into a film. The water vapor transmission rate of the resin composition of the present invention when made into a 30 µm thick film, is preferably 15 g/(m²·24h) or less and more preferably 12 g/(m²·24h) or less, which is usually more than 0 g/(m²·24h) and may be 0.5 g/(m²·24h) or more.

The water vapor transmission volume can be measured by a method described in Examples in accordance with JIS K 7129-1 (moisture-sensitive sensor method).

The resin composition of the present invention is applicable to primers, adhesives, paints, or inks. The primers, adhesives, paints, or inks may contain additives such as hydrophobic solvent, hydrophilic solvent, curing agent, adhesive component, basic substance, emulsifier, cross-linking agent, diluent, light stabilizer, UV absorber, pigment, dyes, and inorganic filler along with the resin composition of the present invention.

Examples of the hydrophilic solvent may include: water; glycol-based solvents such as ethylene glycol; alcohol-based solvents such as methanol, ethanol, n-propyl alcohol, isopropyl alcohol, n-butyl alcohol, isobutyl alcohol, sec-butyl alcohol, tert-butyl alcohol, and 2-ethyl-hexanol; and glycol monoether-based solvents such as ethyl cellosolve, butyl cellosolve, propylene glycol monomethyl ether, propylene glycol monoethyl ether, propylene glycol monopropyl ether, propylene glycol monoisopropyl ether, and propylene glycol monobutyl ether. A single solvent may be used alone or two or more solvents may be used in combination.

Examples of the curing agent may include polyisocyanate compounds, epoxy compounds, polyamine compounds, polyol compounds, or crosslinking agents obtained by blocking functional groups of the above compounds by protective groups, and combinations of two or more of the above exemplary curing agents. The content of the curing agent may be determined depending on the content of the modified polyolefin resin. When using the curing agent, a catalyst such as an organotin compound and tertiary amine compound may be used in combination depending on the usage. A single one curing agent may be used alone or two or more of the curing agents may be used in combination.

Examples of the adhesive component may include known adhesive components such as polyester-based adhesives, polyurethane-based adhesives, and acrylic adhesives. A single adhesive component may be used alone or two or more adhesive components may be used in combination.

When, for example, water, alcohol-based solvent, glycol-based solvent, ketone-based solvent, or ester-based solvent is used as the solvent, the resin composition preferably contains a basic substance. The presence of the basic substance allows pH to be properly adjusted and dispersibility and storage stability of the resin in the solvent can be further enhanced. Examples of the basic substance may include sodium hydroxide, potassium hydroxide, ammonia, methylamine, propylamine, hexylamine, octylamine, ethanolamine, propanolamine, diethanolamine, N-methyl diethanolamine, dimethylamine, diethylamine, triethylamine, N,N-dimethylethanolamine, 2-dimethylamino-2-methyl-1-propanol, 2-amino-2-methyl-1-propanol, morpholine, dimethylethanolamine, 2-amino-2-ethyl-1,3-propanediol. Preferable examples of the basic substance may include ammonia, triethylamine, 2-amino-2-methyl-1-propanol, morpholine, dimethylethanolamine, and 2-amino-2-ethyl-1,3-propanediol. A single basic substance may be used alone or two or more basic substances may be used in combination.

When hydrophobic solvent is used as the solvent, the resin composition preferably contains diluent. The storage stability can be improved by the presence of diluent. Examples of the diluent may include alcohols and propylene-based glycol ethers. Examples of the alcohols may include methanol, ethanol, propanol, isopropanol (2-propanol), and butanol. Examples of the propylene-based glycol ethers may include propylene glycol methyl ether, propylene glycol ethyl ether, and propylene glycol-tert-butyl ether. A single diluent may be used alone or two or more diluents may be used in combination.

When the hydrophobic solvent is used as the solvent, the resin composition preferably contains a crosslinking agent. The crosslinking agent may be a compound that can react with a group (e.g., a hydroxy group, carboxyl group, and amino group) present in the resin composition to form a crosslinked structure. For example, the crosslinking agent may be either a watersoluble crosslinking agent or a water dispersion of the crosslinking agent (crosslinking agent dispersed in water in some manner). Examples of crosslinking agents may include block isocyanate compounds, aliphatic or aromatic epoxy compounds, amine-based compounds, and amino resins. A single crosslinking agent may be used alone or two or more of the crosslinking agents may be used in combination.

When a hydrophilic solvent is used as the solvent, the resin composition preferably contains an emulsifier. Examples of the emulsifier may include surfactants such as nonionic and anionic surfactants, in which a nonionic surfactant is preferable.

Examples of the nonionic surfactant may include polyoxyethylene alkyl ethers, polyoxyethylene polyoxypropylene alkyl ethers, polyoxyethylene derivatives, polyoxyethylene fatty acid esters, polyoxyethylene polyhydric alcohol fatty acid esters, polyoxyethylene polyoxypropylene polyols, sorbitan fatty acid esters, polyoxyethylene hardened castor oil, polyoxyalkylene polycyclic phenyl ethers, polyoxyethylene alkylamines, alkyl alkanolamides, and polyalkylene glycol (meth)acrylates. Preferable examples are polyoxyethylene alkyl ethers, polyoxyethylene fatty acid esters, polyoxyethylene sorbitan fatty acid esters, and polyoxyethylene alkylamines.

Examples of the anionic surfactant may include alkyl sulfate salts, polyoxyethylene alkyl ether sulfate salts, alkylbenzene sulfonic acid salts, α-olefin sulfonic acid salts, methyltauric acid salts, sulfosuccinic acid salts, ether sulfonic acid salts, ether carboxylic acid salts, fatty acid salts, naphthalene sulfonic acid formalin condensates, alkylamine salts, quaternary ammonium salts, alkyl betaines, and alkylamine oxides. Preferable examples are polyoxyethylene alkyl ether sulfate salts and sulfosuccinic acid salts. A single emulsifier may be used alone or two or more emulsifiers may be used in combination.

### Examples

The present invention will be specifically described below with reference to Examples. It should, however, be noted that the present invention is not limited to these Examples. The unit "part" used hereinbelow means "part(s) by weight."

Unless otherwise noted, "%" means "wt%." Temperature conditions in the following descriptions are room temperature (25°C) unless specific temperature conditions are specified otherwise. Pressure conditions are under normal pressure (760 mmHg), unless otherwise specified.

### Example 1

90 parts of propylene-butene copolymer (Tm = 97 °C) as the component (A), 10 parts of polyolefin-based thermoplastic elastomer (Tm = 166°C, Tim = 152°C, Tem=169°C) as the component (B), 4 parts of maleic anhydride, 4 parts of lauryl methacrylate, and 1.5 parts of di-tert-butyl peroxide were kneaded and reacted in a twin-screw extruder, in which reaction temperature was set at 170°C. Decompression devolatilization was performed in the extruder to remove residual unreacted substance. After the reaction, the product was cooled to room temperature to obtain a modified polyolefin resin composition. The total grafted weight of the maleic anhydride in the modified polyolefin resin composition was 3.0 wt% with respect to the total amount (100 wt%) of the modified polyolefin resin. The total graft weight of the maleic anhydride was determined by an alkali titration method. The same applies hereinafter.

The melting point (Tm) of the component (A) and the melting point (Tm), extrapolated melting initiation temperature (Tim), and extrapolated melting end temperature (Tem) of the component (B) were determined using a differential scanning calorimeter in accordance with JIS K7121-1987 at a temperature increase rate of 10°C/min.

### Example 2

The modified polyolefin resin composition was obtained in the same manner as in Example 1, except that the used amount of the propylene-butene copolymer (Tm = 97°C) was changed from 90 parts to 80 parts and the used amount of the polyolefin-based thermoplastic elastomer (Tm = 166°C, Tim = 152°C, Tem = 169°C) was changed from 10 parts to 20 parts. The total grafted weight of the maleic anhydride in the modified polyolefin resin composition was 2.9 wt% with respect to the total amount (100 wt%) of the modified polyolefin resin.

### Example 3

The modified polyolefin resin composition was obtained in the same manner as in Example 1 except that 10 parts of a polyolefin-based thermoplastic elastomer (Tm = 164°C, Tim = 153°C, Tem = 170°C) was used instead of 10 parts of the polyolefin-based thermoplastic elastomer (Tm = 166°C, Tim = 152°C, Tem = 169°C). The total grafted weight of the maleic anhydride in the modified polyolefin resin composition was 3.4 wt% with respect to the total amount (100 wt%) of the modified polyolefin resin.

### Example 4

The modified polyolefin resin composition was obtained in the same manner as in Example 1 except that 10 parts of propylene homopolymer (Tm = 156°C, Tim = 152°C, Tem = 165°C) was used instead of 10 parts of the polyolefin-based thermoplastic elastomer (Tm = 166°C, Tim = 152°C, Tem = 169°C). The total grafted weight of the maleic anhydride in the modified polyolefin resin composition was 3.1 wt% with respect to the total amount (100 wt%) of the modified polyolefin resin.

### Example 5

A modified polyolefin resin composition (1) was obtained in the same manner as in Example 1 except that the used amount of the propylene-butene copolymer (Tm = 97°C) was changed from 90 to 100 parts and the polyolefin-based thermoplastic elastomer (Tm = 166°C, Tim = 152°C, Tem = 169°C) was not used. A modified polyolefin resin composition (2) was obtained in the same manner as in Example 1 except that 100 parts of a propylene-ethylene copolymer (Tm = 142°C, Tim = 140°C, Tem = 155°C) was used instead of 90 parts of the propylene-butene copolymer (Tm = 97°C) and the polyolefin-based elastomer (Tm = 166°C, Tim = 152°C, Tem = 169°C) was not used. 90 parts of the above resin composition (1) as the modified product of the component (A) and 10 parts of the above resin composition (2) as the modified product of the component (B) were kneaded in a twin-screw extruder, in which reaction temperature was set at 170°C. After kneading, the kneaded product was cooled to room temperature to obtain a modified polyolefin resin composition. The total grafted weight of the maleic anhydride in the modified polyolefin resin composition was 3.0 wt% with respect to the total amount (100 wt%) of the modified polyolefin resin.

### Example 6

A modified polyolefin resin composition was obtained in the same manner as in Example 1 except that lauryl methacrylate was not used. The total grafted weight of the maleic anhydride in the modified polyolefin resin composition was 2.9 wt% with respect to the total amount (100 wt%) of the modified polyolefin resin.

### Comparative Example 1

A modified polyolefin resin composition was obtained in the same manner as in Example 1 except that the used amount of the propylene-butene copolymer (Tm = 97°C) was changed from 90 to 100 parts and the polyolefin-based thermoplastic elastomer (Tm = 166°C, Tim = 152°C, Tem = 169°C) was not used. The total grafted weight of the maleic anhydride in the modified polyolefin resin composition was 3.1 wt% with respect to the total amount (100 wt%) of the modified polyolefin resin.

### Comparative Example 2

A modified polyolefin resin composition was obtained in the same manner as in Example 1 except that 100 parts of a propylene-ethylene copolymer (Tm = 105°C) was used instead of 90 parts of the propylene-butene copolymer (Tm = 97°C) and the polyolefin-based thermoplastic elastomer (Tm = 166°C, Tim = 152°C, Tem = 169°C) was not used. The total grafted weight of the maleic anhydride in the modified polyolefin resin composition was 3.0 wt% with respect to the total amount (100 wt%) of the modified polyolefin resin.

### Comparative Example 3

The modified polyolefin resin composition was obtained in the same manner as in Example 1 except that 10 parts of a polyolefin-based thermoplastic elastomer (Tm = 143°C, Tim = 120°C, Tem = 154°C) was used instead of 10 parts of the polyolefin-based thermoplastic elastomer (Tm = 166°C, Tim = 152°C, Tem = 169°C). The total grafted weight of the maleic anhydride in the modified polyolefin resin composition was 3.0 wt% with respect to the total amount (100 wt%) of the modified polyolefin resin.

### Comparative Example 4

The modified polyolefin resin composition was obtained in the same manner as in Example 1 except that 10 parts of a polyolefin-based thermoplastic elastomer (Tm = 135°C, Tim = 112°C, Tem = 153°C) was used instead of 10 parts of the polyolefin-based thermoplastic elastomer (Tm = 166°C, Tim = 152°C, Tem = 169°C). The total grafted weight of the maleic anhydride in the modified polyolefin resin composition was 2.9 wt% with respect to the total amount (100 wt%) of the modified polyolefin resin.

### Comparative Example 5

The modified polyolefin resin composition was obtained in the same manner as in Example 1 except that 10 parts of a polyolefin-based thermoplastic elastomer (Tm = 132°C, Tim = 118°C, Tem = 139°C) was used instead of 10 parts of the polyolefin-based thermoplastic elastomer (Tm = 166°C, Tim = 152°C, Tem = 169°C). The total grafted weight of the maleic anhydride in the modified polyolefin resin composition was 3.2 wt% with respect to the total amount (100 wt%) of the modified polyolefin resin.

Test Example 1: Measurement and Calculation of Average Particle diameter of Modified Product of Component (B)

A volume-based particle diameter distribution was measured using a Mastersizer 3000 (manufactured by Malvern Panalytical Ltd.) to calculate the volume-based median diameter Dv50 (the maximum particle diameter below which 50% of the sample volume falls) as an average particle diameter. The used measurement sample was a solution sample of the modified polyolefin resin compositions obtained in Examples and Comparative Examples (solid content: 15 wt%, solvent composition: methylcyclohexane/methyl ethyl ketone (MEK) = 80/20 (w/w)) added in a solvent for dispersion (solvent composition: methylcyclohexane/MEK = 80/20 (w/w)) so that laser scattering intensity became approximately 12%.

It was confirmed by the following procedures that the modified product of the resin (A) was completely dissolved and the modified product of the resin (B) was present in a form of particles without being dissolved in the measurement sample for measuring the particle diameter distribution.

50 g of the solution sample of the modified polyolefin resin composition obtained in Examples (solid content: 15 wt%, solvent composition: methylcyclohexane/MEK = 80/20 (w/w)) was separated into a centrifuge tube (250 cc) and centrifuged at 10,000 rpm (centrifugal force 15,600 × g) at 15°C for 3 hours. After drying each of supernatant and precipitate, differential scanning calorimetry (DSC) was performed, where a melting point peak of the resin (A) was observed in the solid obtained from the supernatant and a melting point peak of the resin (B) was observed in the solid obtained from the precipitate (i.e., the substance that existed as particles without being dissolved). Fourier transform infrared spectroscopy (FT-IR) spectrum (ATR method) of each of the supernatant and precipitate obtained in the same manner was measured, where peaks derived from the carbonyl group of α,β-unsaturated carboxylic anhydride were observed in both the solids obtained from the supernatant and precipitate and it was confirmed that the dissolved resin was the modified product of the resin (A) and the resin that was not dissolved and existed as particles was the modified product of the resin (B) .

The details of the melting point measurement by DSC are as follows.

In accordance with JIS K7121 (1987), a DSC measurement device (e.g., "DISCOVERY DSC2500", manufactured by TA Instruments Japan Inc.) is used to keep approximately 5 mg sample being heated and melted at 150°C for 10 minutes. Subsequently, the temperature is lowered at a rate of 10°C/min and then is held at -50°C for 5 minutes. Then, the temperature is raised at a rate of 10 °C/min, where a peak melting temperature, which is measured when the temperature is raised to 150°C and the sample is melted, is defined as the melting point.

The details of the FT-IR (ATR method) measurement are as follows. Infrared absorption spectra in a range of from 400 to 4000 cm⁻¹ were observed using an FT-IR measurement device (e.g., "FT/IR-4100," manufactured by JASCO Corporation). Analysis was performed using an accompanying software ("Spectro Manager", JASCO Corporation). The peaks appearing at wavenumbers in a range of from 1700 to 1750 cm⁻¹ were attributed to the peak derived from the carbonyl group of ring-opened α,β-unsaturated carboxylic anhydride and the peak appearing at wavenumbers in a range of from 1750 to 1820 cm⁻¹ was attributed to the peak derived from carbonyl group of non-ring-opened α,β-unsaturated carboxylic anhydride.

Test Example 2: Measurement of Adhesive Strength (Heat-Resistant Adhesivity) by Tensilon Peel Test

To a solution sample of the modified polyolefin resin compositions obtained in each of Examples and Comparative Examples (solid content: 15%, solvent composition: methylcyclohexane/MEK = 80/20 (w/w)), 0.52 g of curing agent (HDI isocyanurate) (solid content: 100%, NCO content: 20%) was added and mixed, and the mixture was applied as an adhesive onto an aluminum foil with a #16 Myer bar so that the resin forms 3 µm thick dry film. Then, the coated aluminum foil, whose coated film was dried using a constant-temperature dryer at 100°C, was laminated to a cast polypropylene (CPP) sheet, and was thermo-compressed at 200°C and 0.1 MPa for 1 second. After the thermocompression, the coated aluminum foil was aged in a constant-temperature dryer that is temperature-controlled at 60°C for 3 days. Using test specimens that were cut to 15 mm widths, laminate bonding strength was measured at a peeling angle of 180 degrees and a peeling speed of 100 mm/min and in an atmosphere at 120°C.

### Test Example 3: Evaluation of Solution Stability

10 g solution sample of each of the modified polyolefin resin compositions obtained in Examples and Comparative Examples (solid content: 15%, solvent composition: methylcyclohexane/MEK = 80/20 (w/w)) was separated into a screw tube and was laid still at 23°C to observe a change in solution state. The samples were evaluated according to predetermined evaluation criteria, where samples that remained fluid after being laid still for one day were evaluated to be "G" and samples that were not fluid and were gelatinous or solidified were evaluated to be "NG."

Table 1 below summarizes the melting points, extrapolated melting initiation temperatures and extrapolated melting end temperatures of the raw materials used in Examples 1-6 and Comparative Examples 1-5, as well as the evaluation and measurement results of Test Examples 1-3.

### Test Example 4: Evaluation of Water Vapor Transmission Rate

### Preparation Method of Evaluation Sample

Solution samples of the prepared resin compositions (solid content: 15 wt%, solvent composition: methylcyclohexane/MEK = 80/20 (w/w)) were applied on a 12 µm thick polyethylene terephthalate (PET) film using a Myer bar and dried at room temperature to prepare evaluation samples.

### Evaluation Method: Method of Calculating Numerical Value

L80-5000 manufactured by Lyssy Co. Ltd. was used to measure water vapor transmission volume. Under measurement conditions of 40°C and 90% RH, the sample was set so that the coated surface faces the side of the detector (low humidity side). In compliance with the standard specified in JIS K 7129-1 (moisture-sensitive sensor method), the measurement results of water vapor transmission volume were obtained.

Based on the results of a single 12 µm thick PET film and each of the evaluation samples, it was calculated how many µm-thick PET film is equivalent to the water vapor permeability of each of the evaluation samples (samples with a layer composition of the samples: 12 µm thick PET film/coating film). The difference between the calculated value and the thickness of the coated PET film (12 µm) was then calculated to calculate the water vapor transmission volume of the coated film itself. The film thickness of the coating at three points on an actual measurement part of the evaluation sample was measured using a JIS type paper thickness measuring instrument MEI-10 manufactured by Citizen Watch Co., Ltd., and the values were averaged to calculate the average of the film thicknesses at the measurement part. The water vapor transmission volume (g/(m²·24h)) was calculated from the calculated transmission volume of the coating film itself and the average film thickness of the measurement part, assuming that the resin composition was a 30 µm thick film. Table 2 below summarizes the results of Test Example 4.

The meaning of abbreviations in Table 1 is as follows.
Tim: Extrapolated melting initiation temperature
Tem: Extrapolated melting end temperature
Adhesive strength: Tensilon peel test adhesive strength

**Table 1**

| | Resin (A) | Resin (B) | | | | Resin (A) / Resin(B) | Average Particle Diameter of Modified Product of Resin (B) | Adhesive Strength | Solution Stability |
|---|---|---|---|---|---|---|---|---|---|
| | Melting Point | Melting Point | Tim | Tem | Tem-Tim | | | | |
| | (°C) | (°C) | (°C) | (°C) | (°C) | (Mass Ratio) | (µm) | (N/15mm) | |
| Example 1 | 97 | 166 | 152 | 169 | 17 | 90/10 | 1.05 | 8.1 | G |
| Example 2 | 97 | 166 | 152 | 169 | 17 | 80/20 | 9.96 | 7.1 | G |
| Example 3 | 97 | 164 | 153 | 170 | 17 | 90/10 | 4.37 | 6.0 | G |
| Example 4 | 97 | 156 | 152 | 165 | 13 | 90/10 | 0.77 | 7.1 | G |
| Example 5 | 97 | 142 | 140 | 155 | 15 | 90/10 | 0.69 | 8.1 | G |
| Example 6 | 97 | 166 | 152 | 169 | 17 | 90/10 | 0.95 | 7.0 | G |
| Comparative Example 1 | 97 | - | - | - | - | 100/0 | - | 4.9 | G |
| Comparative Example 2 | 105 | - | - | - | - | 100/0 | - | 5.1 | NG |
| Comparative Example 3 | 97 | 143 | 120 | 154 | 34 | 90/10 | 178 | 5.0 | NG |
| Comparative Example 4 | 97 | 135 | 112 | 153 | 41 | 90/10 | 13.3 | 4.4 | NG |
| Comparative Example 5 | 97 | 132 | 118 | 139 | 21 | 90/10 | 0.52 | 5.5 | NG |

**Table 2**

| | Single-Layer PET Film | Compar. Ex. 1 | Ex. 1 | Ex.2 | Ex. 4 |
|---|---|---|---|---|---|
| Film Thickness Ave. (µm) | - | 4 | 2.1 | 2.8 | 2 |
| Water Vapor Transmission Volume (g/(m²*24h)) | 46.0 | 33.62 | 36.11 | 33.62 | 34.82 |
| Water Vapor Transmission Volume as 30 µm Single-Layer Film of Resin Composition (g/(m²*24h)) | - | 16.66 | 11.76 | 11.66 | 9.55 |

The above results show that the resin composition of the present invention containing: a modified product of the polyolefin resin (A) having a melting point of 100°C or lower, the polyolefin resin (A) being modified with an α,β-unsaturated carboxylic acid and/or derivative thereof; and a modified product of the component (B) having the extrapolated melting initiation temperature (Tim) of 120°C or higher, the polyolefin resin (B) being modified with an α,β-unsaturated carboxylic acid and/or derivative thereof, in which the modified product of the component (B) is dispersed in the modified product of the component (A) and the average particle diameter of the modified product of the component (B) is in a range of from 0.1 to 100 µm, can exhibit excellent heat-resistant adhesivity to polypropylene sheets and metal materials (difficult-to-adhere base materials) and excellent solution stability.

It can also be understood that the water vapor transmission volume of the resin composition according to Examples is significantly smaller than that of the resin composition according to Comparative Example 1.

## Claims

1. A resin composition comprising:
a modified product of a polyolefin resin (A) having a melting point of 100°C or lower as measured using a differential scanning calorimeter at a temperature increase rate of 10°C/min in accordance with JIS K7121-1987, the polyolefin resin (A) being modified with at least one compound selected from the group consisting of an α,β-unsaturated carboxylic acid and derivative of the α,β-unsaturated carboxylic acid; and
a modified product of a polyolefin resin (B) having an extrapolated melting initiation temperature (Tim) of 120°C or higher as measured using the differential scanning calorimeter at a temperature increase rate of 10°C/min in accordance with JIS K7121-1987, the polyolefin resin (B) being modified with at least one compound selected from the group consisting of an α,β-unsaturated carboxylic acid and derivative of the α,β-unsaturated carboxylic acid, wherein
the modified product of the resin (B) is dispersed in the modified product of the resin (A), and
an average particle diameter of the modified product of the resin (B) is in a range of from 0.1 to 100 µm.

2. The resin composition according to claim 1, wherein the at least one compound selected from the group consisting of the α,β-unsaturated carboxylic acid and derivative of the α,β-unsaturated carboxylic acid comprises maleic anhydride.

3. The resin composition according to claim 1, wherein the at least one compound selected from the group consisting of the α,β-unsaturated carboxylic acid and derivative of the α,β-unsaturated carboxylic acid comprises a (meth)acrylic acid ester.

4. The resin composition according to claim 1, wherein the melting point of the resin (B) measured using the differential scanning calorimeter in accordance with JIS K7121-1987 at a temperature increase rate of 10°C/min is in a range of from 140 to 200°C.

5. The resin composition according to claim 1, wherein, in terms of a mass ratio of the modified product of the resin (A) and the modified product of the resin (B), the modified product of the resin (A) : the modified product of the resin (B) = 50:50 to 95:5.

6. The resin composition according to claim 1, wherein a difference (Tem - Tim) between an extrapolated melting end temperature (Tem) and the extrapolated melting initiation temperature (Tim) measured using the differential scanning calorimeter in accordance with JIS K7121-1987 at the temperature increase rate of 10°C/min is in a range of from 5 to 20°C.

7. The resin composition according to claim 1, further comprising a hydrophobic solvent.

8. A primer comprising the resin composition according to any one of claims 1 to 7.

9. An adhesive comprising the resin composition according to any one of claims 1 to 7.

10. A paint comprising the resin composition according to any one of claims 1 to 7.

11. An ink comprising the resin composition according to any one of claims 1 to 7.

12. A method for producing the resin composition according to any one of claims 1 to 7, comprising:
(1) a step of simultaneously modifying a mixture of the resin (A) and the resin (B) with at least one compound selected from the group consisting of α,β-unsaturated carboxylic acid and derivative of the α,β-unsaturated carboxylic acid to obtain the resin composition; or
(2) a step of modifying the resin (A) with at least one compound selected from the group consisting of α,β-unsaturated carboxylic acid and derivative of the α,β-unsaturated carboxylic acid to obtain the modified product of the resin (A), a step of modifying the resin (B) with at least one compound selected from the group consisting of α,β-unsaturated carboxylic acid and derivative of the α,β-unsaturated carboxylic acid to obtain the modified product of the resin (B), and a step of mixing the obtained modified product of the resin (A) and the obtained modified product of the resin (B) to obtain the resin composition.
